# EUROPEAN PATENT SPECIFICATION

(11) **EP 2 773 177 B1**
(45) Date of publication and mention of the grant of the patent: **17.05.2017**
(21) Application number: 12845156.4
(22) Date of filing: 29.10.2012
(51) Int. Cl.: A01B 49/06, A01C 5/08, A01B 63/24, A01C 5/06, A01C 7/06

(54) **AN AGRICULTURAL MACHINE PROVIDED WITH A DISPLACEABLE IMPLEMENT SECTION**
LANDWIRTSCHAFTLICHE MASCHINE MIT EINER VERSCHIEBBAREN VORRICHTUNG
MACHINE AGRICOLE COMPORTANT UNE SECTION D'ACCESSOIRES POUVANT ÊTRE DÉPLACÉE

(30) Priority: 02.11.2011 SE 1151030
(43) Date of publication of application: 10.09.2014
(73) Proprietor: Väderstad Holding AB, 590 21 Väderstad (SE)
(72) Inventor: LASSEN, Nis, 185 69 Schaprode Rügen (DE); STARK, Crister, S-590 21 Väderstad (SE)
(74) Representative: Groth & Co. KB
(86) International application number: PCT/SE2012/051174
(87) International publication number: WO 2013/066250

(56) References cited:
- WO-A1-99/22578
- WO-A1-2008/017822
- DE-A1- 3 933 345
- DE-A1- 3 933 345
- DE-C- 817 828
- DE-U1-202006 007 920
- GB-A- 754 298
- GB-B- 2 400 296
- US-A- 4 762 075
- US-B1- 6 408 772

## Description

### Technical Field

The present invention relates to agricultural machines such as, for instance, sowing machines, which are provided with loosening shares that loosen the surface of the ground whereupon the trailing sowing shares drop their seeds in drill furrows intended therefor. Particularly, the invention relates to the relation between said loosening shares and the sowing shares as well as the possibility of arranging a distribution nozzle as a more or less integrated part of such a loosening share.

### Background of the Invention

Because the development of deep loosening in connection with sowing, new issues are brought to light. Deep loosening of this type is called "Strip Tillage", which involves that only one part of the ground surface is worked up and that the processing is in a predetermined relation to the drill row. The deep loosening is typically carried out to 25-30 cm of depth and should be made in such a way that the need of cultivation is optimized against the need for and cost of the pulling power. This strip tillage may be made simultaneously with the sowing in one and the same machine or freestanding using two different implements and at two different instants of time. It is very advantageous and suitable to make the strip tillage in connection with the sowing. Some advantages are that a sequence of operations is saved, that the precision between the loosened portions increases, and that the sowing undertaken is easier to contain in the drill furrow. Maybe the most important advantage is that all grains are sown to the same conditions wherein also the tracks of the tractor are loosened. If all grains are sown to the same conditions, a very uniform development of the seedlings can also be expected.

However, a machine of this type has to be able to sow both oil plants and corn. These species of plants differ considerably concerning how the respective root systems are constructed and how the seedlings thrive and develop best.

Oil plants, foremost rape, have a taproot, which is a type of root that grows straight down under the stem and from the sides of which smaller roots spread. Plants having taproot requires loose soil to be able to develop well. Experiments have proved a very clear and good effect of planting rapeseeds in the slightly refilled/recompacted groove that is dug upon deep loosening by a loosening share, a so-called Strip Till Tine. If the seedling can be established in the area where the soil is cracked/loosened, the root development is clearly facilitated. The ability of a seedling to produce a good harvest is more or less related to the root and the root system that it can develop. Rape is most often better developed at a greater row width between the seedlings than corn seedlings, such as, for instance, wheat or barley. This results in that the oil plants should be sown in the groove of the deep loosening share and at a greater row width between the drill rows than in the sowing of corn, where the distance between the drill rows is smaller.

In the sowing of corn, said loosening is not optimal since the corn seedlings have another mode of growth and develop another type of root system that lacks this type of taproot and instead the roots develop in a more branched and bushy way. This means that corn should be sown at a denser row width, wherein it is more difficult to attain a good loosening by such a loosening that is carried out in line with a drill furrow.

A further problem of existing loosening devices is to be able to place fertilizer and/or pesticides in a suitable way in relation to the crops to be sown on the occasion. DE 39 33 345 A1 discloses an agricultural machine that comprises sowing shares combined with loosening means, whereby the loosening means are mounted on a frame part of a first implement section being arranged to assume at least two different lateral positions by a lateral displacement the maximal size of which corresponds to half the distance between two adjacent sowing shares.

### The Object of the Invention

The object of the invention is to solve said problems by providing an agricultural machine provided with a loosening device that is adaptable by simple hand grips to the sowing of different types of crops having entirely different root systems.

The object of the invention is also to, by such a machine, be able to adapt fertilizer and pesticides to suitable depths in the ground for the sowing of different types of crops having entirely different root systems.

The object of the invention is furthermore to provide a sectional adaptation of the loosening device of the machine to the sowing unit thereof for the sowing of different types of crops having entirely different root systems.

In addition, the object of the invention is also to be able to adapt fertilizer and pesticides to suitable depths in the ground in relation to the position laterally of the drill furrows for the sowing of different types of crops having entirely different root systems.

Thus, the object is to, by an agricultural machine, place bulk-type material after a loosening on fixed depth levels and in a lateral position that has a fixed lateral relation to the drill furrows and the seeds that have been sown in the same.

### Summary of the Invention

By the present invention, as the same appears in the independent claims, the above-mentioned objects are met, said disadvantages having been eliminated. Suitable embodiments of the invention are defined in the dependent claims.

The invention intends to provide a device having lateral configurability for implements or the implement part that supports the loosening shares that loosen the soil, the so-called Strip Till Tines. This configurability results in that the loosening area processed by the tines can be displaced in such a way that the loosening furrows will arise between the furrows of the sowing shares when simultaneously sowing corn, while the loosening furrows will arise in line with the furrows of the sowing shares when simultaneously sowing oil plants or similar crops. In other words, the machine has a configurability that allows selecting to have the loosening between every second drill row or under every second drill row alternatively any setting therebetween.

Behind the tines that loosen the soil, the carrying wheels of the machine are positioned that give a suitable recompacting of the soil. The carrying wheels also make that the loosened soil, by the recompacting, is closed so that sowing directly in the loosened area is possible without the planting seed falling down to too large a depth.

Behind the carrying wheels, then there is a number of sowing units that provide drill furrows in which seeds are dropped and which furrows are reclosed.

The invention concerns an agricultural machine according to claim 1, which comprises a number of loosening means each of which provided with a point directed downward in a working position and which loosening means are foldably and/or vertically adjustably mounted on at least one frame part of a first implement section of the agricultural machine. The entire implement section, including all loosening means mounted in the section, is arranged to assume at least two different lateral positions. The agricultural machine is also provided with a lock member to lock said implement section to either one or the other of these lateral positions. Thus, a device according to the invention allows the position of the loosening to be laterally adjusted in relation to the position of the following drill rows, which represents great advantages in view of the fact that the loosening can be adapted to different types of crops.

In one embodiment of the invention, the implement section is, by coupling devices, connected to a support frame of the agricultural machine. Such coupling devices enable an individual handling of each implement section separately in relation to the rest of the machine and the support frame thereof.

In further embodiments of the invention, the coupling devices comprise at least one fork provided with branches, between which branches a sliding device, preferably in the form of a shaft, is mounted, and that a transfer device is movably mounted on the sliding device. The two parts, the fork and the transfer device, are co-operating with each other but may be conversely placed in two different embodiments. Thus, the fork may be placed on the implement section in one embodiment, while in another embodiment, the fork is placed on the support frame.

In further embodiments of the invention, said fork with sliding device is connected to the implement section, and said transfer device is connected to the support frame according to what has been indicated above.

In further embodiments of the invention, said lock member is a clip that is pressed against the sliding device. In another embodiment, said lock member is a locking peg that is mounted in a hole in the sliding device.

In further embodiments of the invention, said lock member is a link mechanism that comprises a knee-joint, which mechanism is connected to a lever arranged to actuate the link mechanism into a locking of the implement section in either the one or to the other of said lateral positions by the knee-joint. This embodiment allows an operator, by manual actuation of a lever, to easily lock the section.

In further embodiments of the invention, said link mechanism is connected to the support frame as well as to the implement section in order to, by said lever, also provide a displacement of the implement section between the two lateral positions and also a locking in the respective position. This embodiment allows an operator, by manual actuation of a lever, to both displace the section and lock the same in one and the same movement.

In further embodiments of the invention, the support frame also supports a number of sowing units for the output of seed to the ground in drill rows. The sowing units are placed after the loosening devices in the machine in respect of the direction of travel. By this arrangement, a determined position between the drill rows and the loosening rows is obtained.

In further embodiments of the invention, carrying wheels are mounted to the support frame, which carrying wheels are arranged in such a way that they also obtain a drill row-closing and packing effect. In addition, the carrying wheels are mounted along the width of the entire machine.

In further embodiments of the invention, the distance between said lateral positions corresponds to half the spacing of the spacing of the sowing units, i.e., the distance between each drill row.

In further embodiments of the invention, at least one further implement section is individually, in relation to the first implement section, readjustable between at least two lateral positions. An agricultural machine according to said embodiments may be provided with a number of sections of loosening devices readjustable in width and individually.

In further embodiments of the invention, a distribution nozzle is mounted adjacent to each loosening means. Each distribution nozzle may be provided with at least two outlets. These nozzles allow placing, for instance, fertilizer on different ground levels after a loosening means. This increases the prospects of an adapted fertility for individual crops.

In further embodiments of the invention, the distribution nozzle is provided with a distributor device, which distributes the amount of bulk-type material to said outlet. This constitutes a further refinement of the distribution of, for instance, fertilizer on different ground levels.

In further embodiments of the invention, said distributor device comprises at least one reflector, which is placed in the distribution nozzle and the inner edge of which works to divide the streaming bulk material so that one portion passes past the inner edge and one portion is deflected by the edge and distributed along the reflector.

### Brief Description of the Drawings

Now, the invention will be described in more detail, reference being made in connection with the accompanying drawing figures.
- Figure 1: shows an overall view of an agricultural machine provided with a device according to the invention.
- Figure 2: shows a loosening share having a connected distribution device mounted on a device according to the invention.
- Figure 3a: shows a view from above of an embodiment according to the invention in a first outer position A.
- Figure 3b: shows an enlargement of a part from the embodiment according to the invention according to Figure 3a.
- Figure 3c: shows an alternative embodiment to the embodiment shown in Figure 3b.
- Figure 4: shows a view from above of an embodiment according to the invention in a second outer position B.
- Figure 5: shows a cross-section of a fertilized, planted and partly grown up crop where a device according to the invention has been set in a first position for, for instance, sowing of rape.
- Figure 6: shows a cross-section of a fertilized, planted and partly grown up crop where a device according to the invention has been set in a second position for, for instance, sowing of wheat.

### Description of the Invention

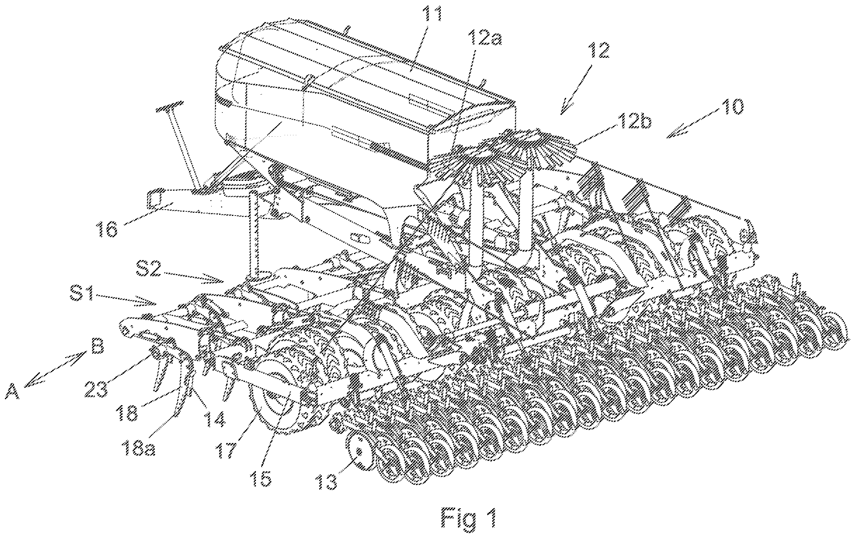

Figure 1 shows an agricultural machine 10 in the form of a sowing machine, which is provided with a bulk storage 11, distribution lines 12 for bulk material, only partly shown, and discharge devices for bulk material such as sowing units 13 and distribution nozzles 14 for, for instance, fertilizer. The distribution lines 12 are divided into delivery ducts 12a for fertilizer and delivery ducts 12b for seed. The agricultural machine is further provided with a support frame 15, a hitch 16 connected to the support frame 15 and carrying wheels 17 for the machine, and various types of compacting devices and furrow-forming devices. Preferably, the agricultural machine 10 is towed by a tractor coupled to the hitch 16. The agricultural machine is further provided with hydraulics for the lowering/elevation of different sections of the machine.

Each distribution nozzle 14 is mounted adjacent to or on a loosening share 18, which, together with its point 18a, acts as scarifier for the following sowing of crop in question. In the agricultural machine shown, the distribution nozzle 14 is detachably mounted directly on the loosening share 18.

The loosening shares 18, with or without the respective distribution nozzles 14, are mounted in groups on frame parts 23 of implement sections S1, S2. Each implement section is laterally adjustable into two lateral positions A, B according to the two-way arrow in the figure.

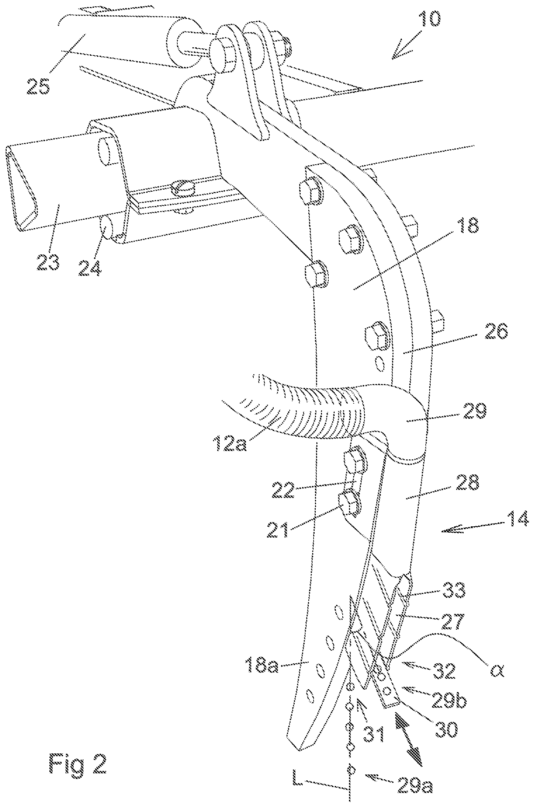

Figure 2 shows the loosening share 18 on which the distribution nozzle 14 is mounted by a screw joint 21 in a slot 22 for the adaptation of the mounting height of the share. The loosening share 18 is formed with a downwardly directed point 18a and foldably movable around a frame part 23 as well as resiliently mounted via spring elements 24 around said frame part of the agricultural machine 10. The figure furthermore shows a hydraulic cylinder 25 effective for the turning down of the loosening share 18 as well as for the stone release of the share. The distribution nozzle 14 is mounted to the rear edge 26 of the loosening share 18 and as near said rear edge as possible, i.e., without appreciable play. The distribution nozzle 14 is formed with an upper connecting part 28 and a lower distributor device 27. To the connecting part 28, a delivery duct 12a is coupled, which from a side of the loosening share 18, via directing means 29, can orient bulk-type material to the connecting part 28. The bulk-type material falls down through the distributor device 27 in a first bulk stream 29a and further down into the soil to a level that mainly corresponds to the loosening depth attained by the point 18a. The spreading part 27 produces a second bulk stream 29b by a reflector 30 being placed in the distributor device 27 at an angle α in relation to a vertical line L through the distribution nozzle 14, wherein 30° < α < 80°. In the figure, angle α=40°. By this placed reflector, a first outlet 31 and a second outlet 32 are formed from the distribution nozzle 14. The figure also shows that the reflector 30 is mounted in grooves 33 arranged in pairs in the distributor device 27, and that the reflector 30 can be displaced in said grooves according to the two-way arrow in the figure. The figure also shows that the distributor device may be provided with several pairs of such grooves so that either a reflector can be moved to another position in the distribution nozzle 14 or that a plurality of reflectors can be mounted on different levels in the distribution nozzle 14 so as to be able to present more than two outlets to the bulk-type material.

In Figure 2, the reflector 30 is shown as a flat disc that can be displaced in and out along the groove 33. However, within the scope of the invention, the reflector may be formed as a curved disc that is displaceable in curved grooves to achieve the effect of, at the same time as the bulk stream is divided, it also, to a certain extent, being controllable with regard to the ground depth depending on the length of the curved disc and degree of insertion into the curved grooves thereof. The reflector may also be cupped around its longitudinal axis in order to work for collecting the bulk stream along the surface of the reflector. The reflector can be locked in the grooves by the distributor device 27 being pressed together by a mechanical device, not shown, or by the distributor device being formed with an inherent press action.

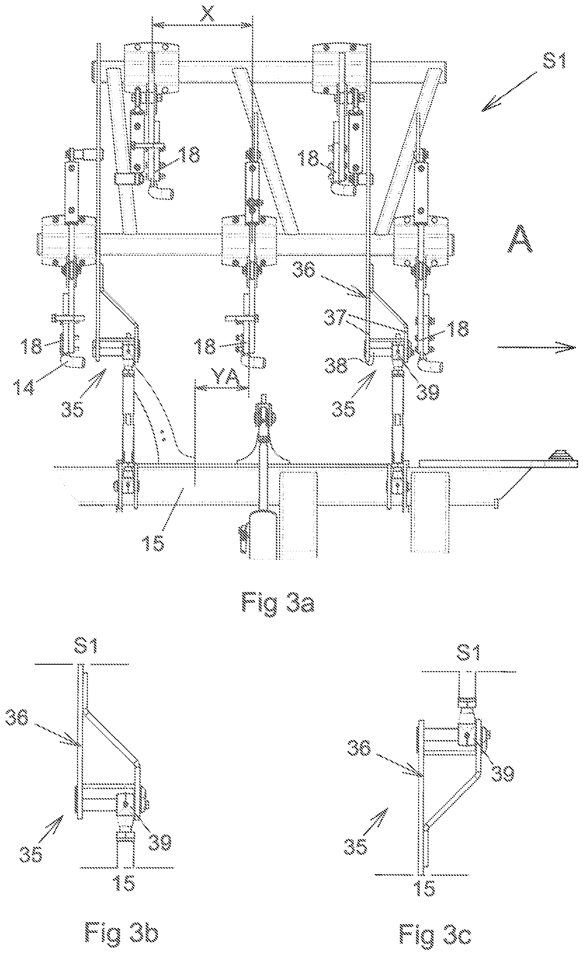

Figure 3a shows the first implement section S1 of loosening shares 18, possibly provided with distribution nozzles 14, which loosening shares are placed in the implement section at constant lateral distances X from each other. The implement section S1 is connected to the support frame 15 via coupling devices 35. In the embodiment illustrated, the coupling devices 35 comprise at least one fork 36 provided with branches 37, between which branches a sliding device 38, preferably in the form of a shaft, is mounted. Furthermore, a transfer device 39 is movably mounted on the sliding device 38. The embodiment shown shows that the implement section S1 is connected to the support frame via two such coupling devices 35. As seen in the figure, the implement section S1 is placed in a first end position A and can be displaced in the direction of the arrow toward a second end position. In said first end position A, the implement section S1 has a determined lateral position in relation to the support frame 15, which can be shown by the distance YA.

Figure 3b shows the orientation of the coupling device 35 where the fork 36 belongs to the implement section S1 while the transfer device 39 belongs to the support frame 15.

Figure 3c shows an embodiment of the coupling device 35 where this is conversely oriented in relation to the previously shown orientation. In this embodiment, the fork 36 belongs to the support frame 15 while the transfer device 39 belongs to the implement section S1.

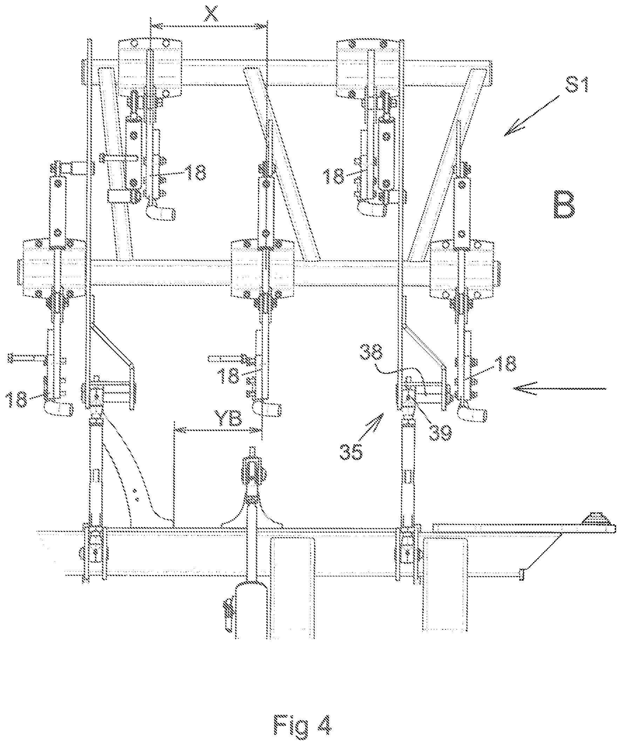

Figure 4 shows the implement section S1 having the corresponding included details as in Figure 3a, where the entire section with the included parts thereof, for instance the loosening shares 18 and the coupling devices 35 with the transfer device 39 thereof displaceable on the sliding device 38, has been displaced from the position shown in Figure 3a to its second end position B from which end position the section again can be moved in the direction of the arrow back to the first end position. In said second end position B, the implement section S1 has assumed another determined lateral position in relation to the support frame 15, which can be shown by YB. However, the lateral distance between each loosening share 18 is still constant and is shown by the distance X in the figure. The difference between the distance YB and the distance YA is equal to the maximal size of the lateral displacement, which in turn corresponds to half the distance between two adjacent sowing shares of a trailing sowing unit.

The locking laterally of the transfer device 39 on the sliding device 38 is provided by a clip that is pressed over the sliding device and abutting against the side of the same. An alternative locking is provided by locking pegs that are pressed into holes formed in the sliding device and intended for the locking. A further alternative to the locking is that a link mechanism having a knee-joint passes a deadlock and thereby locks the mechanism and thereby the transfer device on the sliding device.

Within the scope of the invention, it is also feasible that also the lateral movement of the implement section S1 and also the locking of the same may be effected by a link mechanism.

Within the scope of the invention, locking may also take place not only in the end positions shown but also in one or more intermediate positions and also continuously between the end positions.

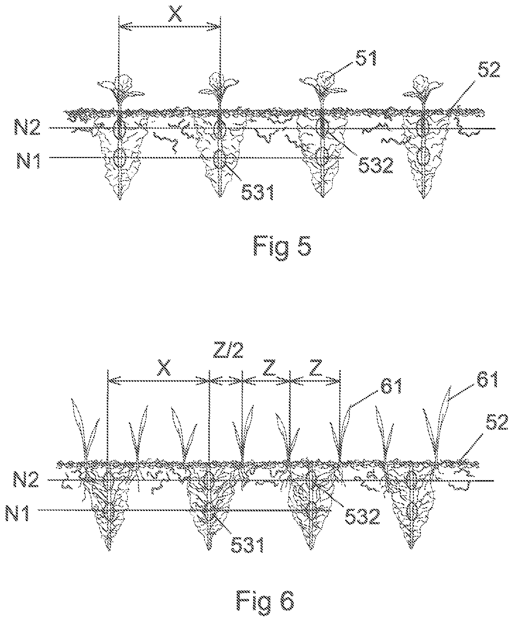

Figure 5 shows a first type of crops 51, in the form of, for instance, rape, which has been sown after the ground 52 has been processed using loosening shares. Each loosening share is individually provided with a distribution nozzle according to what has previously been described, in this case with two outlets. Through the first outlet of the distribution nozzle, a first fertilizer concentration 531 has, in this case, been delivered to a first deeper level N1 in the ground, while the second outlet of the distribution nozzle has delivered a second fertilizer concentration 532 to a second shallower level N2. The loosening shares are placed at a mutual constant lateral distance X to each other, as shown in Figures 3a and 4. Also the active sowing shares are placed at the same lateral distance between each other and also with coinciding position in the longitudinal direction, the seedlings growing directly in line with the loosened furrow, which also has been provided with fertilizer/pesticides.

Figure 6 shows a second type of crops 61, in the form of, for instance, wheat, which has been sown after the ground 52 has been processed using loosening shares. Each loosening share is individually provided with a distribution nozzle according to what has previously been described, also in this case with two outlets. Through the first outlet of the distribution nozzle, a first fertilizer concentration 531 has, also in this case, been delivered to a first deeper level N1 in the ground, while the second outlet of the distribution nozzle has delivered a second fertilizer concentration 532 to a second shallower level N2. The loosening shares are still placed at a mutual constant lateral distance X to each other, as shown in Figures 3a, 4 and 5. Also the sowing shares are placed at the same lateral distance Z between each other but with a spacing that is approximately half in relation to the sowing example for rape in Figure 5. Thus, Z = X/2. In addition, the lateral position of the loosening shares is displaced in relation to the lateral position of the sowing shares by approximately the distance Z/2 according to the figure. Thus, the wheat seedlings grow in pairs halfway between the loosened furrows that have been provided with fertilizer/pesticides. The lateral displacement Z/2 of the loosening shares, i.e., of the implement section, in this sowing example may accordingly correspond to the difference between the distance YB and the distance YA according to what has been described under Figure 4.

The sowing examples shown in Figures 5 and 6 may be made with one and the same agricultural machine by it being provided with a displaceable implement section according to what has been described above at the same time as every second sowing share can be inactivated for a sowing according to Figure 5.

Thus, by the present invention, it is possible to, by one and the same agricultural machine, adapt loosening, fertilizing and sowing to several different types of crops in order to obtain optimal growing conditions for each crop.

## Claims

1. Agricultural machine (10) that comprises a number of loosening means (18) each of which provided with a point (18a) directed downward in a working position and foldably and/or vertically adjustably mounted on at least one frame part (23) of a first implement section (S1) of the agricultural machine (10), whereby the implement section (S1) is, by coupling devices (35), connected to a support frame (15) of the agricultural machine (15), whereby the entire implement section (S1), including all loosening means (18) mounted in the implement section (S1), is arranged to assume at least two different lateral positions (A, B) with respect to the support frame (15) by a lateral displacement the maximal size of which corresponds to half the distance between two adjacent sowing shares, whereby the implement section (S1) is provided with a lock member to be locked to either one (A) or to the other (B) of said lateral positions (A, B), whereby the machine comprises distribution lines (12) divided into delivery ducts (12b) for seed and delivery ducts (12a) for a second bulk material, for instance fertilizer, whereby the delivery ducts (12a) for a second bulk material are connected to distribution nozzles (14) attached to the loosening means (18) on the implement section (S1), **characterized in that** the support frame (15) supports sowing units (13) arranged after the loosening means (18) for the output of seed to the ground in drill rows, whereby the seed is delivered to the sowing units through the delivery duct for seed.

2. Agricultural machine according to claim 1, **characterized in that** the coupling devices (35) comprise at least one fork (36) provided with branches (37), between which branches (37) a sliding device (38), preferably in the form of a shaft, is mounted, and that a transfer device (39) is movably mounted on the sliding device (38).

3. Agricultural machine according to claim 2, **characterized in that** said fork (36) with sliding device (38) is connected to the implement section (S1), and that said transfer device (39) is connected to the support frame (15).

4. Agricultural machine according to any one of claims 2-3, **characterized in that** said lock member is a clip that is pressed against the sliding device (38).

5. Agricultural machine according to any one of claims 2-3, **characterized in that** said lock member is a locking peg that is mounted in a hole in the sliding device (38).

6. Agricultural machine according to any one of claims 1-3, **characterized in that** said lock member is a link mechanism comprising a knee-joint, which mechanism is connected to a lever arranged to actuate the link mechanism and thereby the knee-joint to lock the implement section (S1) in one of said positions (A, B).

7. Agricultural machine according to claim 6, **characterized in that** said link mechanism is connected to the support frame (15) as well as to the implement section (S1) in order to, by said lever, also provide a lateral displacement of the implement section (S1) between the two lateral positions (A, B).

8. Agricultural machine according to any one of claims 1-7, **characterized in that** carrying wheels (17) are mounted to the support frame (15) and arranged in such a way that they also obtain a drill row-closing and packing effect, and that the carrying wheels (17) are mounted along the width of the entire machine (10).

9. Agricultural machine according to any one of claims 1-8, **characterized in that** the distance between said lateral positions (A, B) corresponds to half the spacing of the spacing of the sowing unit.

10. Agricultural machine according to any one of claims 1-9, **characterized in that** at least one further implement section (S2) is individually, in relation to the first implement section (S1), movable between at least two lateral positions (A, B).

11. Agricultural machine according to any one of claims 1-10, **characterized in that** a distribution nozzle (14) is mounted adjacent to each loosening means (18), and that each distribution nozzle (14) is provided with at least two outlets (31, 32).

12. Agricultural machine according to claim 11, **characterized in that** the distribution nozzle (14) is provided with a distributor device (27) that distributes the amount of bulk-type material to said outlets (31, 32).

13. Agricultural machine according to claim 12, **characterized in that** said distributor device (27) comprises at least one reflector (30), which is placed in the distribution nozzle (14) and the inner edge (41) of which works to divide the streaming bulk material so that one portion (31) passes past the inner edge (41) and one portion (32) is deflected by the edge (41) and distributed along the reflector (30).

## Patentansprüche

1. Landwirtschaftliche Maschine (10), die eine Anzahl von Auflockerungsmitteln (18) umfasst, die jeweils mit einer Spitze (18a) versehen sind, in einer Arbeitsstellung nach unten gerichtet sind und auf zusammenklappbare und/oder höhenverstellbare Weise an wenigstens einem Rahmenteil (23) einer ersten Vorrichtung (S1) der land-wirtschaftlichen Maschine (10) angebracht sind, wobei die Vorrichtung (S1) über Kopplungsvorrichtungen (35) mit einem Stützrahmen (15) der landwirtschaftlichen Maschine (15) verbunden ist, wobei die gesamte Vorrichtung (S1), einschließlich aller in der Vorrichtung (S1) angebrachten Auflockerungsmittel (18), so angeordnet ist, dass sie in Bezug auf den Stützrahmen (15) wenigstens zwei unterschiedliche seitliche Stellungen (A, B) über eine seitliche Verschiebung einnimmt, deren maximale Größe dem halben Abstand zwischen zwei benachbarten Säscharen entspricht, wobei die Vorrichtung (S1) mit einem Verriegelungselement versehen ist, das entweder in der einen (A) oder der anderen (B) der seitlichen Stellungen (A, B) zu verriegeln ist, wobei die Maschine Verteilleitungen (12) umfasst, die in Förderkanäle (12b) für Saatgut und Förderkanäle (12a) für ein zweites Schüttgutmaterial, zum Beispiel Düngemittel, unterteilt sind, wobei die Förderkanäle (12a) für ein zweites Schüttgutmaterial mit Verteilungsdüsen (14) verbunden sind, die an den Auflockerungsmitteln (18) an der Vorrichtung (S1) angebracht sind, **dadurch gekennzeichnet, dass** der Stützrahmen (15) Säeinheiten (13) stützt, die hinter den Auflockerungsmitteln (18) zur Ausgabe des Saatguts auf den Boden in Drillreihen angeordnet sind, wobei das Saatgut durch den Förderkanal für das Saatgut zu den Säeinheiten gefördert wird.

2. Landwirtschaftliche Maschine nach Anspruch 1, **dadurch gekennzeichnet, dass** die Kopplungsvorrichtungen (35) wenigstens eine mit Schenkeln (37) versehene Gabel (36) umfassen, wobei zwischen den Schenkeln (37) eine Gleitvorrichtung (38), vorzugsweise in Form einer Welle, angebracht ist, und dass eine Umsetzeinrichtung (39) auf bewegbare Weise an der Gleitvorrichtung (38) angebracht ist.

3. Landwirtschaftliche Maschine nach Anspruch 2, **dadurch gekennzeichnet, dass** die Gabel (36) einschließlich der Gleitvorrichtung (38) mit der Vorrichtung (S1) verbunden ist und dass die Umsetzeinrichtung (39) mit dem Stützrahmen (15) verbunden ist.

4. Landwirtschaftliche Maschine nach einem der Ansprüche 2 bis 3, **dadurch gekennzeichnet, dass** das Verriegelungselement eine Klammer ist, die gegen die Gleitvorrichtung (38) gedrückt wird.

5. Landwirtschaftliche Maschine nach einem der Ansprüche 2 bis 3, **dadurch gekennzeichnet, dass** das Verriegelungselement ein Verriegelungszapfen ist, der in einem Loch in der Gleitvorrichtung (38) angebracht ist.

6. Landwirtschaftliche Maschine nach einem der Ansprüche 1 bis 3, **dadurch gekennzeichnet, dass** das Verriegelungselement ein Verbindungsmechanismus ist, der ein Kniegelenk umfasst, wobei der Mechanismus mit einem Hebel verbunden ist, der so angeordnet ist, dass er den Verbindungsmechanismus und dadurch das Kniegelenk so betätigt, dass die Vorrichtung (S1) in einer der Stellungen (A, B) verriegelt wird.

7. Landwirtschaftliche Maschine nach Anspruch 6, **dadurch gekennzeichnet, dass** der Verbindungsmechanismus sowohl mit dem Stützrahmen (15) als auch mit der Vorrichtung (S1) verbunden ist, um über den Hebel auch eine seitliche Verschiebung der Vorrichtung (S1) zwischen den beiden seitlichen Stellungen (A, B) vorzusehen.

8. Landwirtschaftliche Maschine nach einem der Ansprüche 1 bis 7, **dadurch gekennzeichnet, dass** Laufräder (17) an dem Stützrahmen (15) angebracht und auf eine solche Weise angeordnet sind, dass sie ebenfalls einen Drillreihen verschließenden und verdichtenden Effekt erzielen, und dass die Laufräder (17) entlang der Breite der gesamten Maschine (10) angebracht sind.

9. Landwirtschaftliche Maschine nach einem der Ansprüche 1 bis 8, **dadurch gekennzeichnet, dass** der Abstand zwischen den seitlichen Stellungen (A, B) dem halben Abstand der Beabstandung der Säeinheit entspricht.

10. Landwirtschaftliche Maschine nach einem der Ansprüche 1 bis 9, **dadurch gekennzeichnet, dass** wenigstens eine weitere Vorrichtung (S2) in Bezug auf die erste Vorrichtung (S1) einzeln zwischen wenigstens zwei seitlichen Stellungen (A, B) bewegbar ist.

11. Landwirtschaftliche Maschine nach einem der Ansprüche 1 bis 10, **dadurch gekennzeichnet, dass** eine Verteilungsdüse (14) benachbart zu jedem Auflockerungsmittel (18) angebracht ist und dass jede Verteilungsdüse (14) mit wenigstens zwei Auslässen (31, 32) versehen ist.

12. Landwirtschaftliche Maschine nach Anspruch 11, **dadurch gekennzeichnet, dass** die Verteilungsdüse (14) mit einer Verteilvorrichtung (27) versehen ist, die die Menge des schüttgutartigen Materials auf die Auslässe (31, 32) verteilt.

13. Landwirtschaftliche Maschine nach Anspruch 12, **dadurch gekennzeichnet, dass** die Verteilvorrichtung (27) wenigstens einen Reflektor (30) umfasst, der in der Verteilungsdüse (14) platziert ist und dessen Innenkante (41) wirkt, um das strömende Schüttgutmaterial so zu teilen, dass ein Teil (31) an der Innenkante (41) vorbeigeführt wird und ein Teil (32) durch die Kante (41) abgelenkt und entlang dem Reflektor (30) verteilt wird.

## Revendications

1. Machine agricole (10) qui comprend un certain nombre de moyens d'ameublissement (18) dont chacun est pourvu d'une pointe (18a) dirigée vers le bas en position de travail et montée repliable et/ou réglable verticalement sur au moins une pièce (23) du cadre d'une première section (S1) d'outils de la machine agricole (10),
dans laquelle la section (S1) d'outils est, par des dispositifs d'accouplement (35), raccordée à un châssis support (15) de la machine agricole (15),
dans laquelle l'ensemble de la section (S1) d'outils, y compris tous les moyens d'ameublissement (18) montés dans la section (S1) d'outils, est agencé pour adopter au moins deux positions latérales (A, B) différentes par rapport au châssis support (15) par un déplacement latéral dont la dimension maximale correspond à la moitié de la distance entre deux socs de semis adjacents,
dans laquelle la section (S1) d'outils est équipée d'un élément de verrouillage à verrouiller sur l'une (A) ou sur l'autre (B) desdites positions latérales (A, B), dans laquelle la machine comprend des canaux de distribution (12) répartis en gaines d'amenée (12b) pour la semence et en gaines d'amenée (12a) pour un second matériau en vrac, par exemple un engrais,
dans laquelle les gaines d'amenée (12a) pour un second matériau en vrac sont raccordées à des buses de distribution (14) fixées sur les moyens d'ameublissement (18) sur la section (S1) d'outils, **caractérisée en ce que** le châssis support (15) soutient les unités de semis (13) disposées après les moyens d'ameublissement (18) pour faire sortir la semence sur le sol dans les sillons de semis, moyennant quoi la semence est livrée aux unités de semis par la gaine d'amenée pour la semence.

2. Machine agricole selon la revendication 1, **caractérisée en ce que** les dispositifs d'accouplement (35) comprennent au moins une fourche (36) pourvue de branches (37), entre lesquelles branches (37) est monté un dispositif coulissant (38), de préférence sous la forme d'un arbre, et **en ce qu'**un dispositif de transfert (39) est monté mobile sur le dispositif coulissant (38).

3. Machine agricole selon la revendication 2, **caractérisée en ce que** ladite fourche (36) avec le dispositif coulissant (38) est raccordé à la section (S1) d'outils, et **en ce que** ledit dispositif de transfert (39) est raccordé au châssis support (15).

4. Machine agricole selon la revendication 2 ou 3, **caractérisée en ce que** ledit élément de verrouillage est une fixation à ressort qui est serrée contre le dispositif coulissant (38).

5. Machine agricole selon la revendication 2 ou 3, **caractérisée en ce que** ledit élément de verrouillage est un taquet de verrouillage qui est monté dans un trou dans le dispositif coulissant (38).

6. Machine agricole selon l'une quelconque des revendications 1 à 3, **caractérisée en ce que** ledit élément de verrouillage est un mécanisme de liaison comprenant une genouillère, lequel mécanisme est raccordé à un levier agencé pour actionner le mécanisme de liaison et de ce fait la genouillère afin de verrouiller la section (S1) d'outils dans l'une desdites positions (A, B) .

7. Machine agricole selon la revendication 6, **caractérisée en ce que** ledit mécanisme de liaison est raccordé au châssis support (15) ainsi qu'à la section (S1) d'outils afin d'assurer aussi, par ledit levier, un déplacement latéral de la section (S1) d'outils entre les deux positions latérales (A, B).

8. Machine agricole selon l'une quelconque des revendications 1 à 7, **caractérisée en ce que** des roues porteuses (17) sont montées sur le châssis support (15) et disposées de telle façon qu'elles obtiennent aussi un effet de fermeture de sillons de semis et de tassage et **en ce que** les roues porteuses (17) sont montées le long de la largeur de la machine (10) toute entière.

9. Machine agricole selon l'une quelconque des revendications 1 à 8, **caractérisée en ce que** la distance entre lesdites positions latérales (A, B) correspond à la moitié de l'espacement de l'unité de semis.

10. Machine agricole selon l'une quelconque des revendications 1 à 9, **caractérisée en ce que** au moins une autre section (S2) d'outils est mobile individuellement, par rapport à la première section (S1) d'outils, entre au moins deux positions latérales (A, B).

11. Machine agricole selon l'une quelconque des revendications 1 à 10, **caractérisée en ce qu'**une buse de distribution (14) est montée tout à côté de chaque moyen d'ameublissement (18), et **en ce que** chaque buse de distribution (14) est pourvue d'au moins deux sorties (31, 32).

12. Machine agricole selon la revendication 11, **caractérisée en ce que** la buse de distribution (14) est équipée d'un dispositif distributeur (27) qui distribue la quantité de matériau de type en vrac auxdites sorties (31, 32).

13. Machine agricole selon la revendication 12, **caractérisée en ce que** ledit dispositif distributeur (27) comprend au moins un déflecteur (30), qui est placé dans la buse de distribution (14) et dont le bord intérieur (41) agit pour diviser le matériau en vrac qui ruisselle de façon à ce qu'une partie (31) passe au-delà du bord intérieur (41) et une partie (32) est déviée par le bord (41) et distribuée le long du déflecteur (30).
